# EUROPÄISCHE PATENTSCHRIFT

(11) **EP 4 081 738 B1**
(45) Veröffentlichungstag und Bekanntmachung des Hinweises auf die Patenterteilung: **18.06.2025**
(21) Anmeldenummer: 20817339.3
(22) Anmeldetag: 02.12.2020
(51) Int. Cl.: F23D 3/40, F23M 9/02

(54) **STRÖMUNGSLEITELEMENT, STRÖMUNGSLEITSYSTEM UND HEIZVORRICHTUNG**
FLOW-DIRECTING ELEMENT, FLOW-DIRECTING SYSTEM AND HEATING APPARATUS
ÉLÉMENT D'ORIENTATION D'ÉCOULEMENT, SYSTÈME D'ORIENTATION D'ÉCOULEMENT ET APPAREIL DE CHAUFFAGE

(30) Priorität: 24.12.2019 DE 102019135786
(43) Veröffentlichungstag der Anmeldung: 02.11.2022
(73) Patentinhaber: Webasto SE, 82131 Stockdorf (DE)
(72) Erfinder: DELL, Vitali, 82131 Stockdorf (DE); SCHWEYER, Christian, 82131 Stockdorf (DE)
(74) Vertreter: Schumacher & Willsau
(86) Internationale Anmeldenummer: PCT/EP2020/084297
(87) Internationale Veröffentlichungsnummer: WO 2021/130000

(56) Entgegenhaltungen:
- EP-A2- 1 860 379
- DE-A1- 102013 214 387
- DE-A1- 19 507 556
- DE-B4- 102012 100 173

## Beschreibung

Die Erfindung betrifft ein Strömungsleitelement, ein Strömungsleitsystem und eine Heizvorrichtung, insbesondere eine mobile Heizvorrichtung für Fahrzeuge.

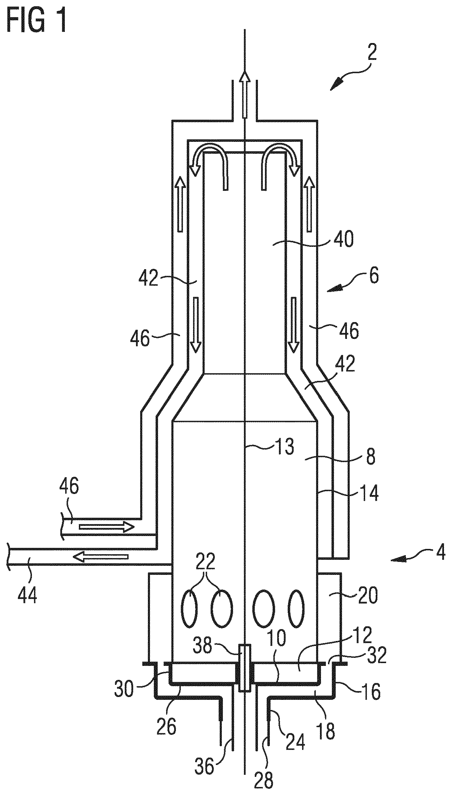

Heizvorrichtungen mit einem Verdampferverbrenner finden Anwendung in mit flüssigem Kraftstoff betriebenen Stand- und /oder Zusatzheizungen, welche insbesondere für Fahrzeuge eingesetzt werden. In Fig. 1 ist eine Heizvorrichtung mit einem Verdampferverbrenner nach dem Stand der Technik gemäß der DE 10 2012 100 173 B4 gezeigt. Diese Heizvorrichtung 2 ist als mobiles, brennstoffbetriebenes Heizgerät für eine Standheizung eines motorbetriebenes Landfahrzeugs ausgelegt. Der Verdampferbrenner 4 selbst weist unter anderem eine Brennkammer 8, eine Verdampferaufnahme 10 und ein Verdampferelement 12 zur Verdampfung von flüssigem Brennstoff auf. Brennkammer 8, Verdampferaufnahme 10 und Verdampferelement 12 sind im Wesentlichen rotationssymmetrisch ausgelegt. Die Brennkammer 8 wird in Umfangsrichtung durch eine umlaufende Brennkammerwandung 14 begrenzt. Stirnseitig im Bereich der Brennstoffzuführung, die durch ein Brennstoffzuführrohr 36 und eine Brennluft-Einlass 24 gegeben ist, wird die Brennkammer 8 durch die Verdampferaufnahme 10 begrenzt. In der Verdampferaufnahme 10 ist auf der Seite, die der Brennkammer 8 zugewandt ist, das Verdampferelement 12 aufgenommen. Der Verdampferbrenner 4 weist ferner auf der von der Brennkammer 8 abgewandten Seite der Verdampferaufnahme 10 ein Brennluftleitelement 16 auf. Das Brennluftleitelement 16 ist schalenförmig ausgebildet und ist ähnlich wie eine Kappe über die Verdampferaufnahme 10 gestülpt.

Ringförmig um die Brennkammer 8 ist ein Brennluft-Vorraum 20 ausgebildet. Ein Spalt 18 zwischen Bodenwand 26 und Verdampferaufnahme 10 mündet in den Brennluft-Vorraum 20. Von dem Brennluft-Vorraum 20 wird wiederum über Brennluft-Durchgangsöffnungen 22, die in der Brennkammerwandung 14 ausgebildet sind, eine Fluidverbindung mit der Brennkammer 8 hergestellt. Der Spalt 18 zwischen der Bodenwand 26 der Verdampferaufnahme 10 und dem Brennluftleitelement 16 erstreckt sich durchgehend über die gesamte Fläche der Bodenwand 26 (abgesehen von dem Bereich des Brennluft-Einlasses 24), so dass die Bodenwand 26 im Wesentlichen über deren gesamte Fläche (abgesehen von einem zentralen Bereich) gekühlt wird.

Das Brennstoff-Zuführrohr 36 ist innerhalb des stutzenförmigen Brennluft-Einlasses 24 angeordnet, so dass es im Einsatz von Brennluft umströmt und dadurch gekühlt wird, um zu verhindern, dass der Brennstoff direkt bei Eintritt in das Verdampferelement 12 frühzeitig verdampft und gezündet wird, was zu einem Pulsieren der Verbrennung führen kann. In einem Wärmetauscher 6 wird ein erster Strömungspfad 42 für die Abgase gebildet. Die Abgase strömen innerhalb des Wärmetauschers 6 entlang des ersten Strömungspfads 42 zu einer Abgas-Ableitung 44, über welche die Abgase nach Außen geführt werden. Ferner ist ein zweiter Strömungspfad 46 innerhalb des Wärmetauschers 6 vorgesehen, in dem Kühlfluid des Kraftfahrzeuges geführt wird. Der erste 42 und der zweite 46 Strömungspfad sind dabei derart angeordnet, dass im Einsatz Wärme effektiv von den Abgasen auf das Kühlfluid übertragen wird.

Aus Montagegründen muss das glockenförmige Brennluftleitelement 16 an zumindest einer Stelle unterbrochen sein. Diese Unterbrechung kann dafür genutzt werden, ein Brennstoffzufuhrrohr 16 oder einen Glühstift des Brenners anzuordnen. Aus der DE 10 2013 214 387 A1 ist bereits ein Strömungsleitelement in Form eines Einströmelementes umfassend einen ersten Bodenbereich und eine an den ersten Bodenbereich anschließende und sich im Wesentlichen in Richtung einer Längsmittenachse des Einströmelements erstreckende Außenumfangswandung, eine in radialem Abstand zur Außenumfangswandlung angeordnete und mit dieser einen Raumbereich begrenzende erste Innenumfangswandung sowie eine Einströmöffnungsanordnung zum Einströmen von Luft in das Einströmelement bekannt. Dabei ist vorgesehen, dass die Einströmungsöffnungsanordnung im ersten Bodenbereich vorgesehen und zur Erzeugung einer Wirbelströmung ausgebildet ist. Die DE 195 07 556 A1 offenbart ein anderes Strömungsleitelement.

Nachteilig an der vorherigen beschriebenen Lösung ist, dass die schalenförmige Geometrie die Größe einer Verdampferaufnahme beschränkt, soweit ein Gebläsevorraum vorgegeben ist. Weiterhin kann ein solches Strömungselement nur aufwändig am Brenner angeordnet, zentriert und fixiert werden. Durch die Nähe zu den heißen Brennerteilen kommt hier nur eine eingeschränkte Materialauswahl in Frage. Weiterhin besteht insbesondere bei einem exzentrischen Gebläse das Problem, dass die Luft an einer Stelle seitlich in die Heizvorrichtung geführt wird und eine gleichmäßige Kühlung somit nicht oder nur sehr aufwändig realisiert werden kann. Aufgabe der Erfindung ist es ein verbessertes Strömungsleitelement, Strömungsleitsystem und eine verbesserte Heizvorrichtung, insbesondere eine mobile Heizvorrichtung für Fahrzeuge anzugeben.

Die Aufgabe der Erfindung wird hinsichtlich des Strömungsleitelement durch die Merkmale des Anspruchs 1 gelöst, hinsichtlich des Strömungsleitsystem durch die Merkmale des Anspruchs 6 und hinsichtlich der Heizvorrichtung durch die Merkmale des Anspruchs 8 gelöst. Zweckdienliche Ausgestaltungen ergeben sich aus den jeweiligen Unteransprüchen.

Das erfindungsgemäße Strömungsleitelement für eine Heizvorrichtung, insbesondere eine Heizvorrichtung mit einem Verdampferverbrenner, umfasst einen Körper, welcher einen seitlich angeordneten Anströmbereich auf einer Unterseite des Strömungsleitelements, einen zentral angeordneten Ausströmbereich, der einen Durchbruch von einer Unterseite des Strömungsleitelements zu einer der Unterseite gegenüberliegenden Oberseite des Strömungsleitelements umfasst, und zumindest ein Führungselement aufweist, welches so angeordnet ist, dass es eine Strömungsführung vom Anströmbereich zum Ausströmbereich ermöglicht.

Unterseite und Oberseite des Strömungsleitelements sind zwei sich gegenüberliegende Seiten des Strömungsleitelements. Dabei ist die Unterseite zweckmäßigerweise mit einer Auflagefläche ausgestaltet, die Oberseite ist dazu ausgelegt, in einem in die Heizvorrichtung eingebauten Zustand zu einer Verdampferverbrenneraufnahme ausgerichtet zu sein. Eine äußere Form, insbesondere gesehen in Projektion auf die Oberseite des Strömungsleitelements ist an die Form der aufnehmenden Heizvorrichtung, insbesondere eines Brennluftvorraums angepasst. Das erfindungsgemäße Strömungsleitelement ist insbesondere für eine Heizvorrichtung mit einem außerhalb einer Mittelachse angeordnetem, also exzentrischen, Gebläse geeignet. Das Strömungsleitelement leitet somit in einfacher und kostengünstiger Weise eine Luftströmung vom Gebläse zum zentralen Ausströmbereich.

Die Luftleitelemente können zweckmäßigerweise durch auf der Unterseite des Strömungsleitelements angeordnete Vorsprünge oder Wände gebildet sein, so dass auf dem Strömungsleitelement auf zur Unterseite hin offene Kanäle gebildet sind. Alternativ können die Strömungsleitelemente auch durch geschlossene Kanäle gebildet werden.

Zweckmäßigerweise ist das Strömungsleitelement ein Kunststoffformteil, insbesondere ein Kunststoffspritzgussteil. Ein solches Kunststoffformteil ist kostengünstig herzustellen und vereinfacht die Montage. Als Kunststoffe kommen zum Beispiel Polyphenylensulfit (PPS) oder mit Glasfasern verstärktes PPS, insbesondere PPS GF 40 in Frage. In einer weiteren Ausgestaltung ist das Strömungsleitelement zumindest teilweise oder ausschließlich aus einem metallischen Material gebildet oder aus metallischem Material und einem der vorgenannten Kunststoffe gebildet.

In Ausgestaltung weist das Strömungsleitelement eine Aussparung zum Einsetzen eines Glühstiftes auf, welche insbesondere auf einer dem Anströmbereich gegenüberliegenden Seite angeordnet ist.

In einer weiteren Ausgestaltung ist der Anströmbereich zur Aufnahme eines Gebläses ausgelegt. Erfindungsgemäß, ist der Anströmbereich als Auswölbung ausgebildet.

Die Auswölbung ist zur Oberseite des Strömungsleitelements gewölbt. Die Unterseite der Auswölbung ist offen ausgestaltet.

Das oder die Führungselemente sind zweckmäßigerweise dazu ausgebildet, die Luftströmung vom Anströmbereich zum Ausströmbereich fächerartig auszuweiten, und/oder die die Luftströmung vom Anströmbereich aufzuteilen und einen ersten Teil zum Ausströmbereich zu leiten und einen weiteren Teil um den Ausströmbereich in Umfangsrichtung weiter zu führen und dann an einer oder mehreren Öffnungen radial nach innen zum Ausströmbereich zu leiten. Durch das eine oder die mehreren Führungselemente kann ein gezieltes Strömungsprofil erzeugt werden. Um einen Teil der Luftströmung in Umfangsrichtung zu führen kann eine umlaufende Wand am Ausströmbereich, welche einen oder mehrere Durchbrüche aufweist, vorgesehen sein.

In weiterer Ausgestaltung weist das Strömungsleitelement auf einer der oder den Führungselementen abgewandten Seite, d.h. der Oberseite des Strömungsleitelements, Vertiefungen zur Einlage eines Befestigungselements zur Fixierung in einem Gebläsevorraum eines Verdampferverbrenners auf.

Das erfindungsgemäße Strömungsleitsystem für eine Heizvorrichtung, insbesondere eine Heizvorrichtung mit einem Verdampferverbrenner, umfasst ein erfindungsgemäßes Strömungsleitelement und ein Befestigungselement. Mit dem Befestigungselement lässt sich in einfacher Weise das Strömungsleitelement in der Heizvorrichtung, insbesondere einem Gebläsevorraum bzw. Brennvorraum, befestigen. In einer ersten Ausgestaltung ist das Befestigungselement geeignet, selbst gegen die Wandung des Gebläsevorraum bzw. Brennvorraum verspannt zu werden, um so das Strömungsleitelement zu befestigen und ortsfest zu fixieren. Dazu kann das Befestigungselement Vorsprünge aufweisen, welche in die Vertiefungen der Wandung eingreifen oder gegen eine glatte Wandung gestützt sind. Alternativ oder zusätzlich ist das Befestigungselement geeignet, das Strömungsleitelement so zu spannen, dass das Strömungsleitelement selbst gegen Gebläsevorraum bzw. Brennvorraum verspannt wird.

In Ausgestaltung ist das Befestigungselement ein Federelement, insbesondere ein aus einem Federstahl ausgebildetes, vorzugsweise einstückiges, Federelement. In einer weiteren Ausgestaltung ist das Federelement zumindest teilweise aus Kunststoff, aus Federstahl und Kunststoff oder ausschließlich aus Kunststoff gebildet. Ein solches Federelement kann insbesondere zwei, drei, vier oder mehr Vorsprünge in Richtung einer Umfangswandung und eine gleiche Anzahl von nach innen zum Ausströmbereich des Strömungsleitelements gerichtete Zungen aufweisen. In Ausgestaltung weist das Federelement in Umfangsrichtung keine geschlossene Form auf, sondern eine Öffnung, welche genutzt werden kann, um das Befestigungselement mittels einer Verformung in Position zu bringen. Diese Öffnung ist insbesondere mit einer Aussparung des Strömungsleitelements fluchtend angeordnet. Das Strömungsleitelement hat insbesondere auf der Oberseite Vertiefungen, in welche das Befestigungselement eingelegt wird, und die insbesondere für die Zungen und/oder Vorsprüngen so ausgelegt sind, dass Strömungsleitelement und Befestigungselement in genau einer Orientierung zueinander passen. Weiterhin kann das Befestigungselement, insbesondere das Federelement, insbesondere die Zungen des Federelement dazu ausgelegt sein, mit einer Verdampferverbrenneraufnahme bzw. Verdampferhalterung, insbesondere einem bodenseitigen Vorsprung der Verdampferverbrenneraufnahme bzw. Verdampferhalterung, im eingebauten Zustand in Kontakt zu kommen. Durch den Druck des bodenseitigen Vorsprungs auf die Zungen kann das Federelement vorteilhaft verspannt werden.

Die erfindungsgemäße Heizvorrichtung mit einem Verdampferverbrenner mit einem Gebläsevorraum und einem exzentrischen Gebläse umfasst ein erfindungsgemäßes Strömungsleitsystem.

In Ausgestaltung wird das Strömungsleitelement selbstzentrierend im Gebläseraum aufgenommen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer Prinzipskizze:
- Fig. 1: Heizvorrichtung nach dem Stand der Technik;
- Fig. 2: erste Ansicht eines Strömungsleitelements;
- Fig. 3: Befestigungselement;
- Fig. 4: Ansicht einer offenen Heizvorrichtung;
- Fig. 5: zweite Ansicht einer ersten Ausgestaltung eines Strömungsleitelements;
- Fig. 6: zweite Ansicht einer zweiten Ausgestaltung eines Strömungsleitelements und
- Fig. 7: zweite Ansicht einer dritten Ausgestaltung eines Strömungsleitelements.

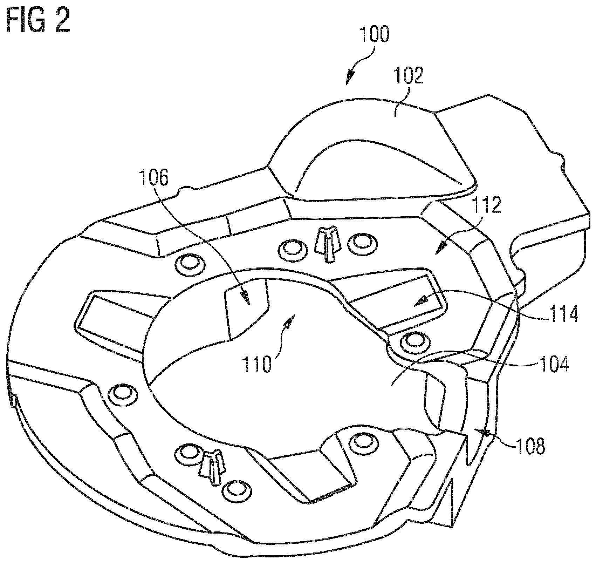

Fig. 2 zeigt eine erste Ansicht eines Strömungsleitelements. Dieses Strömungsleitelement 100 weist eine äußere Umrandung auf, welche an einen Aufnahmebereich in einem Brennluftvorraum angepasst ist. Das Strömungsleitelement 100 weist in einem äußeren Bereich einen Anströmbereich 102 auf, welcher auf die Position eines Gebläses abgestimmt ist. Es handelt sich um ein exzentrisch angeordnetes Gebläse.

Weiterhin weist das Strömungsleitelement 100 einen zentralen Ausströmbereich 104 auf, welcher es erlaubt, dass die Luft von einer Unterseite des Strömungsleitelements 100 zu einer Oberseite des Strömungsleitelements durchtritt. Auf der Unterseite des Strömungsleitelements 100 sind Führungselemente 106 angeordnet. Das Strömungsleitelement 100 kann z.B. ein Kunststoffformteil sein.

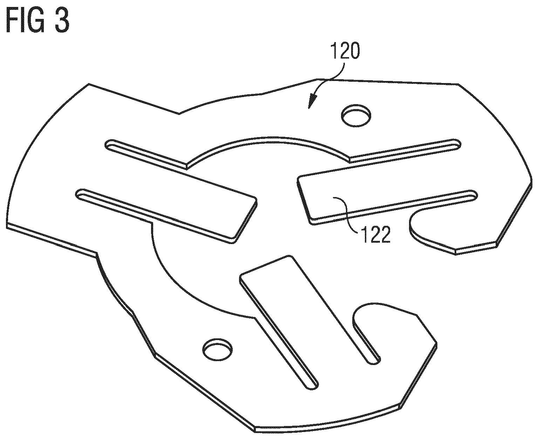

Das Strömungsleitelement 100 weist eine Aussparung 108 zur Aufnahme eines Glühstiftes auf. Weiterhin sind in der in Fig. 2 gezeigten Oberseite eine erste Vertiefung 112 und eine zweite Vertiefung 114 gezeigt. Die erste Vertiefung weist eine Umfangsform des in Fig. 3 gezeigten Befestigungselements 120 auf. Das Befestigungselement 120 kann in die erste Vertiefung 112 und zweiten Vertiefungen 114 eingelegt werden. Mit dem Befestigungselement 120 lässt sich in einfacher Weise das Strömungsleitelement in der Heizvorrichtung, insbesondere einem Gebläsevorraum bzw. Brennvorraum, befestigen. Dieses Befestigungselement 120 weist drei Vorsprünge, die sich radial nach außen erstrecken auf. Die zweiten Vertiefungen 114 sind für die drei nach innen gerichteten Zungen 122 des Befestigungselements 120 ausgelegt. Das Befestigungselement 120 weist in Umfangsrichtung keine geschlossene Form auf, sondern eine Öffnung, welche genutzt werden kann, um das Befestigungselement 120 mittels einer Verformung in Position zu bringen. Diese Öffnung ist zur fluchtenden Anordnung mit der Aussparung 108 des Strömungsleitelements 100 ausgelegt. Das Befestigungselement ist hier sowohl geeignet das Strömungsleitelement 100 zu verspannen als auch mit zweien der Vorsprünge gegen eine Wandung des Gebläseraums 20 abzustützen. Das Befestigungselement 120 ist vorzugsweise ein Federelement, welches z.B. aus einem Federstahl hergestellt sein kann.

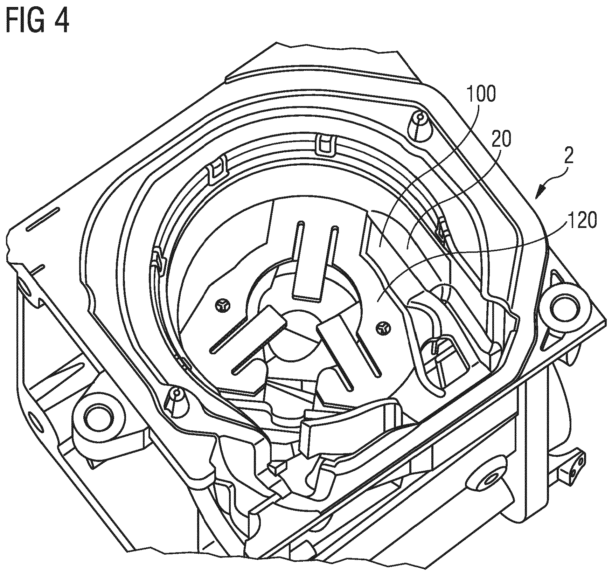

Fig. 4 zeigt eine Ansicht einer offenen Heizvorrichtung mit einem in einem Brennluftvorraum 20 eingelegten Strömungsleitelement 100 und einem Befestigungselement 120. Eine Unterseite des Strömungsleitelements 100 liegt auf einer Oberseite eines Boden des Brennluftvorraums 20 auf. Das Befestigungselement 120 ist auf der Oberseite des Strömungsleitelements 100 angeordnet. Das Befestigungselement 120 ist somit zu einer nicht dargestellten Verdampferverbrenneraufnahme bzw. Verdampferhalterung hin angeordnet. Die Zungen 122 des Befestigungselements 120 sind insbesondere dazu ausgelegt mit einem Dom oder bodenseitigen Vorsprung der Verdampferverbrenneraufnahme bzw. Verdampferhalterung, im eingebauten Zustand in Kontakt zu kommen. Durch den Druck des bodenseitigen Vorsprungs der Verdampferverbrenneraufnahme bzw. Verdampferhalterung auf die Zungen 122 kann als das Federelement ausgestaltete Befestigungselement 120 vorteilhaft verspannt werden. Mit Hilfe des Befestigungselements 120 wird somit das Strömungsleitelement 100 in der gewünschten Position gehalten.

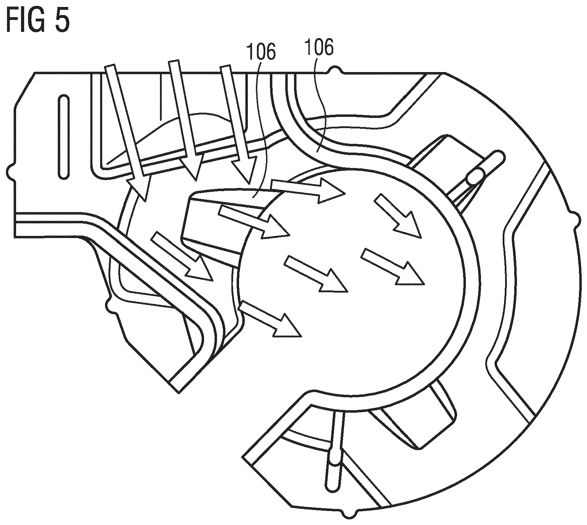

Fig. 5 bis 7 zeigen verschiedene Ausgestaltungen einer Unterseite eines Strömungsleitelements. Die in Fig. 5 gezeigte Ausgestaltung weist zum einem die oberseitige Vertiefung für die Zunge 122 des Befestigungselements 120 als Führungselement 106 aus. Des Weiteren weist sie ein Führungselement 106 auf, welche um den Ausströmbereich 104 als umlaufende Wand ausgestaltet ist. Die Führungselemente 106 dieser Ausgestaltung sind dazu ausgelegt, die Luft von dem Anströmbereich 102 zum Ausströmbereich 104 auf relativ kurzen Wege zu leiten und dabei die Luftströmung aufzuweiten. Durch diese Ausgestaltung wird Luft auf sehr kurzen Wege zu einer oberhalb des Ausströmbereichs 104 angeordneten Verdampferaufnahme geleitet, so dass eine starke Kühlung erreicht wird.

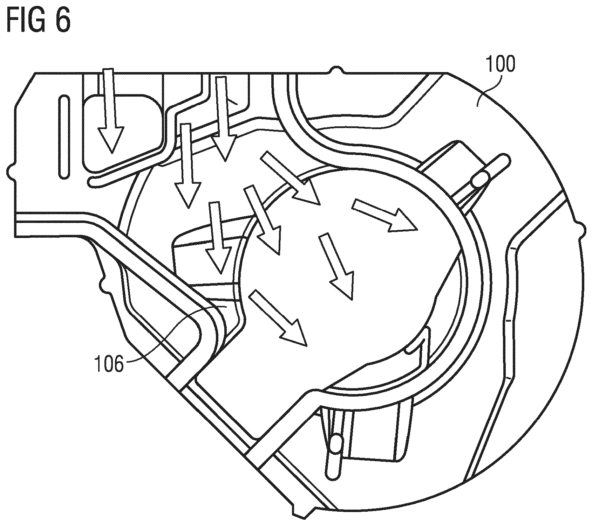

Fig. 6 zeigt eine weitere Ausgestaltung des Strömungsleitelements 100 von einer Unterseite. Dieses Strömungsleitelement 100 unterscheidet sich insbesondere in einer abweichenden Ausgestaltung des um den Ausströmbereich 104 angeordneten Führungselements 106, welches auch im Bereich der Aussparung 108 geschlossen ist.

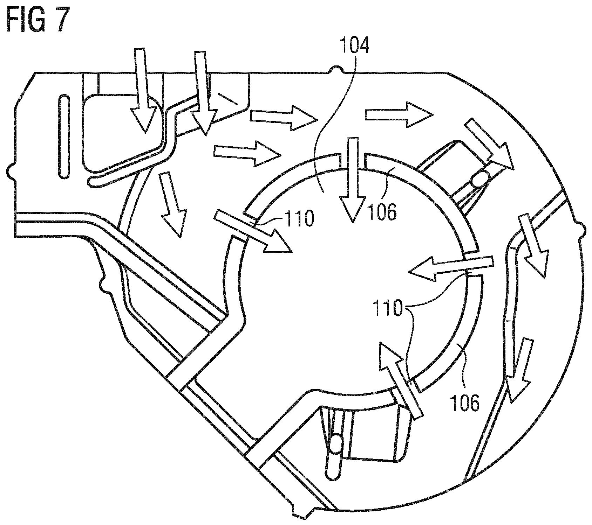

Fig. 7 zeigt eine weitere Ausgestaltung des Strömungsleitelements 100. Diese Ausgestaltung unterscheidet sich darin, dass ein um den Ausströmbereich 104 angeordneten Führungselements 106 einen umlaufenden Strömungskanal bildet, der mit Öffnungen 110 versehen ist. Dieser Strömungskanal mit den Öffnungen 110 ist geeignet, die Luft von verschiedenen Seiten zum Ausströmbereich 104 zu leiten. Dadurch wird eine sehr gleichmäßige Strömung durch den Ausströmbereich 104 erzielt und eine oberhalb des Ausströmbereichs 104 angeordneten Verdampferaufnahme kann besonders gleichmäßig gekühlt werden.

### Bezugszeichenliste

- 2: Heizvorrichtung
- 4: Verdampferverbrenner
- 8: Brennkammer
- 10: Verdampferaufnahme
- 12: Verdampferelement
- 16: Brennluftleitelement
- 14: Brennkammerwandung
- 18: Spalt
- 20: Brennluftvorraum
- 22: Brennluft-Durchgangsöffnungen
- 26: Bodenwand
- 24: Brennluft-Einlass
- 36: Zuführrohr
- 42: erster Strömungspfad
- 44: Abgas-Ableitung
- 46: zweiter Strömungspfad
- 100: Strömungsleitelement
- 102: Anströmbereich
- 104: Ausströmbereich
- 106: Führungselement
- 108: Aussparung
- 110: Öffnung
- 112: erste Vertiefung
- 114: zweite Vertiefung

- 120: Befestigungselement
- 122: Zunge

- t: Dicke

## Patentansprüche

1. Strömungsleitelement (100) für eine Heizvorrichtung (2), insbesondere eine Heizvorrichtung (2) mit einem Verdampferverbrenner (4), umfassend einen Körper, welcher einen seitlich angeordneten Anströmbereich (102) auf einer Unterseite des Strömungsleitelements, einen zentral angeordneten Ausströmbereich (104), der einen Durchbruch von einer Unterseite des Strömungsleitelements zu einer der Unterseite gegenüberliegenden Oberseite des Strömungsleitelements umfasst, und zumindest ein Führungselement (106) aufweist, welches so angeordnet ist, dass es eine Strömungsführung vom Anströmbereich zum Ausströmbereich ermöglicht, wobei der Anströmbereich (102) als Auswölbung ausgebildet ist.

2. Strömungsleitelement nach Anspruch 1, wobei das Strömungsleitelement (100) ein Kunststoffformteil, insbesondere ein Kunststoffspritzgussteil, ist.

3. Strömungsleitelement (100) nach Anspruch 1 oder 2, wobei das Strömungsleitelement (100) eine Aussparung (108) zum Einsetzen eines Glühstiftes aufweist, welche insbesondere auf einer dem Anströmbereich (102) gegenüberliegenden Seite angeordnet ist.

4. Strömungsleitelement (100) nach einem der vorhergehenden Ansprüche, wobei das oder die Führungselemente (106) dazu ausgebildet sind, die Luftströmung vom Anströmbereich (102) zum Ausströmbereich (104) fächerartig auszuweiten, und/oder die die Luftströmung vom Anströmbereich (102) aufzuteilen und einen ersten Teil zum Ausströmbereich (104) zu leiten und einen weiteren Teil um den Ausströmbereich (104) in Umfangsrichtung weiter zu führen und dann an einer oder mehreren Öffnungen (110) radial nach innen zum Ausströmbereich (104) zu leiten.

5. Strömungsleitelement (100) nach einem der vorhergehenden Ansprüche, wobei das Strömungsleitelement (100) auf einer dem oder den Führungselementen (106) abgewandten Seite Vertiefungen (112, 114) zur Einlage eines Befestigungselements (120) zur Fixierung in einem Gebläsevorraum oder Brennluftvorraum (20) eines Verdampferverbrenners (4) aufweist.

6. Strömungsleitsystem für eine Heizvorrichtung (2), insbesondere eine Heizvorrichtung mit einem Verdampferverbrenner (4), umfassend ein Strömungsleitelement (100) nach einem der Ansprüche 1 bis 5 und ein Befestigungselement (120).

7. Strömungsleitsystem nach Anspruch 6, wobei das Befestigungselement (120) ein Federelement, insbesondere ein aus einem Federstahl ausgebildetes Federelement, ist.

8. Heizvorrichtung (2) mit einem Verdampferverbrenner (4) mit einem Gebläsevorraum oder Brennluftvorraum (20) und einem exzentrischen Gebläse, umfassend ein Strömungsleitsystem nach Anspruch 6 oder 7.

9. Heizvorrichtung (2) nach Anspruch 8, wobei das Strömungsleitelement selbstzentrierend im Gebläseraum oder Brennluftvorraum (20) aufgenommen wird.

## Claims

1. Flow-directing element (100) for a heating apparatus (2), in particular a heating apparatus (2) with an evaporator burner (4) having a body which comprises a laterally arranged inflow region (102) on an underside of the flow-directing element, having a centrally arranged outflow region (104), which comprises a through-passage from an underside of the flow-directing element to an upper side of the flow-directing element, the upper side being located opposite the underside, and having at least one guide element (106) which is arranged such that it allows flow to be guided from the inflow region to the outflow region, wherein the inflow region (102) is designed as a bulge.

2. Flow-directing element according to claim 1, wherein the flow-directing element (100) is a molded plastic part, in particular a plastic injection moulded part.

3. Flow-directing element (100) according to claim 1 or 2, wherein the flow-directing element (100) has a recess (108) for inserting a glow plug, which is arranged in particular on a side opposite the inflow region (102).

4. Flow-directing element (100) according to one of the preceding claims, wherein the guide element or elements (106) are designed to expand the air flow from the inflow region (102) to the outflow region (104) in a fan-like manner, and/or to divide the air flow from the inflow region (102) and to guide a first part to the outflow region (104) and to guide a further part around the outflow region (104) in the peripheral direction and then to guide it radially inwards to the outflow region (104) at one or more openings (110).

5. Flow-directing element (100) according to one of the preceding claims, the flow-directing element (100) having, on a side facing away from the guide element or elements (106), recesses (112, 114) for the insertion of a fastening element (120) for fixing in a blower vestibule or combustion air vestibule (20) of an evaporator burner (4).

6. Flow-directing system for a heating apparatus (2), in particular a heating apparatus with an evaporator burner (4), comprising a flow-directing element (100) according to one of the claims 1 to 5 and a fastening element (120).

7. Flow-directing system according to claim 6, wherein the fastening element (120) is a spring element, in particular a spring element made of spring steel.

8. Heating apparatus (2) with an evaporator burner (4) with a blower vestibule or combustion air vestibule (20) and an eccentric blower, comprising a flow-directing system according to claim 6 or 7.

9. Heating apparatus (2) according to claim 8, wherein the flow-directing element is received in the blower space or combustion air vestibule (20) in a self-centering manner.

## Revendications

1. Élément d'orientation d'écoulement (100) pour un dispositif de chauffage (2), notamment un dispositif de chauffage (2) avec un brûleur à vaporisation (4), comprenant un corps qui présente une zone d'entrée (102) agencée latéralement sur un côté inférieur de l'élément d'orientation d'écoulement, une zone de sortie (104) agencée centralement, qui présente un passage d'un côté inférieur de l'élément d'orientation d'écoulement à un côté supérieur de l'élément d'orientation d'écoulement opposé au côté inférieur, et au moins un élément de guidage (106) qui est agencé de manière à permettre un guidage d'écoulement de la zone d'entrée à la zone de sortie, la zone d'entrée (102) étant réalisée sous forme de bombement.

2. Élément d'orientation d'écoulement selon la revendication 1, dans lequel l'élément d'orientation d'écoulement (100) est une pièce moulée en matière plastique, notamment une pièce moulée par injection en matière plastique.

3. Élément d'orientation d'écoulement (100) selon la revendication 1 ou 2, dans lequel l'élément d'orientation d'écoulement (100) présente un évidement (108) pour l'insertion d'une tige à incandescence, qui est notamment agencé sur un côté opposé à la zone d'entrée (102).

4. Élément d'orientation d'écoulement (100) selon l'une quelconque des revendications précédentes, dans lequel le ou les éléments de guidage (106) sont réalisés pour élargir l'écoulement d'air en éventail depuis la zone d'entrée (102) jusqu'à la zone de sortie (104), et/ou pour diviser l'écoulement d'air depuis la zone d'entrée (102) et orienter une première partie vers la zone de sortie (104) et guider une autre partie autour de la zone de sortie (104) dans la direction circonférentielle, puis l'orienter radialement vers l'intérieur jusqu'à la zone de sortie (104) au niveau d'une ou de plusieurs ouvertures (110).

5. Élément d'orientation d'écoulement (100) selon l'une quelconque des revendications précédentes, dans lequel l'élément d'orientation d'écoulement (100) présente, sur un côté détourné du ou des éléments de guidage (106), des renfoncements (112, 114) pour l'insertion d'un élément de fixation (120) destiné à être fixé dans une antichambre de soufflante ou une antichambre d'air de combustion (20) d'un brûleur à vaporisation (4).

6. Système d'orientation d'écoulement pour un dispositif de chauffage (2), notamment un dispositif de chauffage avec un brûleur à vaporisation (4), comprenant un élément d'orientation d'écoulement (100) selon l'une quelconque des revendications 1 à 5 et un élément de fixation (120).

7. Système d'orientation d'écoulement selon la revendication 6, dans lequel l'élément de fixation (120) est un élément à ressort, notamment un élément à ressort réalisé en un acier à ressort.

8. Dispositif de chauffage (2) avec un brûleur à vaporisation (4) avec une antichambre de soufflante ou une antichambre d'air de combustion (20) et une soufflante excentrique, comprenant un système d'orientation d'écoulement selon la revendication 6 ou 7.

9. Dispositif de chauffage (2) selon la revendication 8, dans lequel l'élément d'orientation d'écoulement est reçu de manière autocentrée dans la chambre de soufflante ou l'antichambre d'air de combustion (20).
